# EUROPÄISCHE PATENTSCHRIFT

(11) **EP 1 045 511 B1**
(45) Veröffentlichungstag und Bekanntmachung des Hinweises auf die Patenterteilung: **25.10.2006**
(21) Anmeldenummer: 00103957.7
(22) Anmeldetag: 25.02.2000
(51) Int. Cl.: H02K 23/08, H02K 7/106, H02P 3/06

(54) **Reihenschlussmotor**
Series motor
Moteur série

(30) Priorität: 18.03.1999 DE 19912121
(43) Veröffentlichungstag der Anmeldung: 18.10.2000
(73) Patentinhaber: C. & E. Fein GmbH, 73529 Schwäbisch-Gmünd-Bargau (DE)
(72) Erfinder: Meyer, Christoph, 70599 Stuttgart (DE)
(74) Vertreter: Gahlert, Stefan

(56) Entgegenhaltungen:
- EP-A- 1 014 543
- WO-A-91/03866
- WO-A-97/36367
- DE-A- 3 636 555
- DE-A- 4 201 023
- DE-A- 4 333 733
- US-A- 2 818 542
- US-A- 4 144 482

## Beschreibung

Die Erfindung betrifft einen Reihenschlußmotor mit Kommutator, insbesondere für ein gebremstes Elektrowerkzeug, mit einer Schalteinrichtung zur Umschaltung zwischen Motorbetrieb und Bremsbetrieb, wobei im Motorbetrieb mindestens eine Feldwicklung und eine Ankerwicklung in einem von einer Versorgungsspannung beaufschlagten Motorstromkreis in Reihe geschaltet ist, und wobei im Bremsbetrieb die mindestens eine Feldwicklung mit der Ankerwicklung einen geschlossenen und von der Versorgungsspannung abgetrennten Bremsstromkreis bildet.

Ein derartiger Reihenschlußmotor ist aus der EP 0 471 038 B1 bekannt.

Der bekannte Motor ist insbesondere zum Antrieb von gebremsten Elektrowerkzeugen, wie etwa gebremsten Winkelschleifern oder Kreissägen geeignet und verwendet hierzu einen zwischen Motor- und Bremsbetrieb umschaltenden mehrpoligen Umschalter, mittels dessen der Motor im Bremsbetrieb kurzgeschlossen und die Feldwicklung umgepolt wird, sowie Mittel zur Begrenzung des Bremsstroms durch die Feldwicklungen. Es soll auf diese Weise eine sanfte und schnelle Kurzschlußbremsung durch eine eigenständige Selbsterregung ermöglicht werden. Der Anker ist im Motorbetrieb zwischen die Feldwicklungen und die Wendepolwicklungen geschaltet, wobei im Bremsbetrieb ein Strompfad zwischen dem Anker und den Wendepolwicklungen geschaltet ist, der eine Zenerdiodenanordnung zur Begrenzung des Bremsstroms enthält, so daß nur ein bestimmter Anteil des Bremsstroms über die Feldwicklungen fließt.

Mit einem derartigen Motor läßt sich zwar eine zuverlässige Bremsung des Motors bei Umschaltung in den Bremsbetrieb erreichen, jedoch ist die Verwendung von Wendepolwicklungen aufwendig und teuer.

Es wurde bereits versucht, derartige Probleme zu umgehen, indem ein Kondensator, der im Motorbetrieb aufgeladen wird, im Bremsbetrieb zur Einleitung der Selbsterregung benutzt wird (DE 42 01 023 A1).

Die bekannte Schaltung weist den Nachteil auf, daß die Kondensatorladung nur einmal zur Einleitung der Bremsung genutzt werden kann. Reicht die Kondensatorladung nicht aus, um die Bremsung einzuleiten, so ist nach der Kondensatorentladung erst recht nicht mit einer Einleitung der Bremsung zu rechnen.

Aus der DE 4 333 733 A1 ist weiterhin ein Reihenschlussmotor nach dem Oberbegriff des Anspruchs 1 bekannt.

Der Erfindung liegt die Aufgabe zugrunde, einen verbesserten Reihenschlußmotor zu schaffen, der die obigen Nachteile vermeidet, insbesondere möglichst einfach und kostengünstig aufgebaut ist und eine zuverlässige Bremsung bei Umschaltung in den Bremsbetrieb gewährleistet.

Diese Aufgabe wird erfindungsgemäß bei einem Reihenschlußmotor gemäß der eingangs genannten Art dadurch gelöst, daß ein netzgespeister Transformator vorgesehen ist, dessen Sekundärwicklung im Bremsstromkreis parallel zu der mindestens einen Feldwicklung angeschlossen ist, und daß eine Transistorschaltung zur Steuerung des im Bremsstromkreis über die Ankerwicklung und die mindestens eine Feldwicklung fließenden Stroms vorgesehen ist.

Die Aufgabe der Erfindung wird auf diese Weise vollkommen gelöst.

Durch die Sekundärwicklung des Transformators wird ein Strom in den Bremsstromkreis eingeführt, die ausreicht, um eine zuverlässige Einleitung der Bremsung zu erreichen.

Auf diese Weise wird erfindungsgemäß selbst in äußerst ungünstigen Fällen eine sichere Einleitung der Bremsung bei Umschaltung in den Bremsbetrieb gewährleistet.

Durch die Transistorschaltung wird es ermöglicht, den Bremsstrom nachzuregeln, so daß auch bei fortschreitendem Bremsvorgang noch ein starkes Bremsmoment zur Verfügung steht. Hierdurch läßt sich die Bremscharakteristik deutlich verbessern und eine kurze Bremszeit sicherstellen. Außerdem wird erfindungsgemäß die Verwendung einer zu den Feldwicklungen parallel geschalteten Diodenstrecke überflüssig.

Die Erfindung ermöglicht es ferner, auf Wendepolwicklungen gänzlich zu verzichten, was zu einer deutlichen Vereinfachung des Aufbaus und einer Kostenreduzierung führt.

In vorteilhafter Weiterbildung der Erfindung ist ein Feldeffekttransistor vorgesehen, der mit Source und Drain parallel zu einem Lastwiderstand im Bremsstromkreis zwischen der Ankerwicklung und der mindestens einen Feldwicklung angeschlossen ist und der über eine vom Bremsstrom abhängige Steuerspannung zwischen Source und Gate angesteuert wird.

Durch diese Maßnahme ist eine ausreichende Spannungsfestigkeit des Transistors auch in ungünstigen Fällen gewährleistet, ohne daß hierzu zusätzliche Maßnahmen erforderlich sind. Durch die vom Bremsstrom abhängige Steuerung des Feldeffekttransistors zwischen Source und Gate wird erreicht, daß bei Beginn des Bremsvorgangs zunächst der volle Bremsstrom über den Lastwiderstand fließt und daß erst bei fortschreitender Bremsung der Feldeffekttransistor durchschaltet, um so auch gegen Ende der Bremsung noch ein hohes Bremsmoment zu erzeugen.

In zusätzlicher Weiterbildung der Erfindung ist an die Sekundärwicklung des Transformators ein Spannungsstabilisator angeschlossen, der über einen im Bremsstromkreis mit dem Lastwiderstand in Reihe geschalteten Stromfühlerwiderstand zur Erzeugung einer bremsstromabhängigen, der Spannung des Spannungsstabilisators entgegengerichteten Vorspannung zwischen Source und Gate des Feldeffekttransistors angeschlossen ist.

Auf diese Weise läßt sich die gewünschte Ansteuerung des Feldeffekttransistors in Abhängigkeit vom Bremsstrom auf besonders einfache und zuverlässige Weise erreichen.

Hierzu ist in bevorzugter Weiterbildung als Spannungsstabilisator eine Zenerdiode vorgesehen, die mit ihrer Anode an der mindestens einen Feldwicklung, einem Ende der Sekundärwicklung und dem Vorwiderstand angeschlossen ist und mit ihrer Kathode mit dem Gate des Feldeffekttransistors und mit dem anderen Ende der Sekundärwicklung verbunden ist.

Hierdurch läßt sich die gewünschte Ansteuerung des Feldeffekttransistors mit besonders einfachen Mitteln gewährleisten.

In zusätzlicher Weiterbildung dieser Ausführung ist ein Kondensator parallel zu der Zenerdiode angeschlossen und die Kathode der Zenerdiode über eine Diode an die Sekundärwicklung des Transformators angeschlossen.

Durch diese Maßnahme wird die Steuerspannung für den Feldeffekttransistor geglättet, was zu einer gleichmäßigeren Bremsung führt.

Gemäß einer weiteren Ausführung der Erfindung sind der Feldeffekttransistor und der Vorwiderstand mit der Kathode einer Diode verbunden, deren Anode im Bremsstromkreis mit der Ankerwicklung verbunden ist.

Durch diese Maßnahme wird ein Schutz gegen die theoretische Möglichkeit erreicht, daß infolge einer äußerst ungünstigen Konstellation eine Selbsterregung in entgegengesetzter Richtung eingeleitet werden könnte, die zu einer Überspannung zwischen Drain und Gate führen könnte und somit den Feldeffekttransistor zerstören könnte.

Gemäß einem weiteren Merkmal der Erfindung ist die Sekundärwicklung des Transformators über einen Gleichrichter an einen Pol der Ankerwicklung angeschlossen.

Durch diese Maßnahme wird die Einleitung des Bremsvorgangs in der gewünschten Richtung vorgegeben, da der Strom über die Sekundärwicklung nur in einer Richtung fließen kann.

In zusätzlicher Weiterbildung der Erfindung ist zwischen dem einen Pol der Ankerwicklung und dem anderen Ende der Sekundärwicklung bzw. der zumindest einen Feldwicklung eine Schutzdiode zum Schutz gegen Lichtbögen von der Schalteinrichtung vorgesehen.

Hierdurch wird eine Beschädigung des Transformators und des mit der Sekundärwicklung in Reihe geschalteten Gleichrichters im Falle der Entstehung eines Lichtbogens an der Schalteinrichtung bei Schaltvorgängen vermieden.

Gemäß einem weiteren Merkmal der Erfindung ist der Lastwiderstand zwischen Source und Drain als Wendepolwicklung ausgebildet.

In manchen Fällen ist dies von Vorteil, insbesondere bei größeren Maschinen, die eine Motorleistung von 2000 Watt oder mehr aufweisen.

Dadurch werden thermische Probleme vermieden, die bei hohen Motorleistungen durch die starke Belastung des Lastwiderstandes auftreten können. Dennoch ist eine solche Maßnahme auch bei hohen Leistungen nicht unbedingt notwendig und nur in Einzelfällen vorteilhaft, da hierdurch ggf. der Herstellungsaufwand und die Herstellungskosten etwas ansteigen können.

Gemäß einer alternativen Ausführung der Erfindung wird die Aufgabe bei einem Reihenschlußmotor gemäß der eingangs genannten Art dadurch gelöst, daß ein netzgespeister Transformator vorgesehen ist, dessen Sekundärwicklung im Bremsstromkreis parallel zu der mindestens einen Feldwicklung angeschlossen ist, daß eine Transistorschaltung zur Steuerung des im Bremsstromkreis über die Ankerwicklung und die mindestens eine Feldwicklung fließenden Stroms vorgesehen ist, daß die Transistorschaltung einen Feldeffekttransistor aufweist, der mit Source und Drain über eine Diode parallel an die mindestens eine Feldwicklung angeschlossen ist, und daß die Transistorschaltung den Strom durch die mindestens eine Feldwicklung in Abhängigkeit vom über die Ankerwicklung fließenden Strom regelt.

Bei dieser Ausführung kann auf die Verwendung von Wendepolen vollständig verzichtet werden.

Ferner ergibt sich der besondere Vorteil, daß sich die Bremscharakteristik derart einstellen läßt, daß ein langsames Austrudeln des Motors am Ende der Bremsung, das bei herkömmlichen, mit Wendepolen ausgestatteten Motoren mit selbsterregter Bremsung etwa gemäß der EP 0 471 038 B1 auftrat, vermieden wird.

Hierzu ist der Feldeffekttransistor vorzugsweise mit seinem Gate über einen Spannungsteiler an die beiden Enden der Ankerwicklung angeschlossen.

Ferner ist vorzugsweise im Bremsstromkreis ein Lastwiderstand vorgesehen, der zwischen einem Ende der Ankerwicklung und der mindestens einen Feldwicklung über eine Diode angeschlossen ist, wobei der Feldeffekttransistor mit Drain an einem Ende des Lastwiderstandes angeschlossen ist und mit Source mit dem anderen Ende der Ankerwicklung und der mindestens einen Feldwicklung verbunden ist.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: ein vereinfachtes Schaltbild des erfindungsgemäßen Motors im Motorbetrieb;
- Fig. 2: die Schaltung gemäß Fig. 1 im Bremsbetrieb;
- Fig. 3: eine abgewandelte Ausführung eines erfindungsgemäßen Motors im Bremsbetrieb; und
- Fig. 4: eine Darstellung des zeitlichen Verlaufs der Ankerspannung, des durch die Feldwicklungen fließenden Stroms und der Drehzahl während eines Bremsvorgangs bei einem Motor gemäß Fig. 3, im Vergleich zum Drehzahlverlauf eines herkömmlichen Motors mit über Wendepole selbsterregter Bremsung.

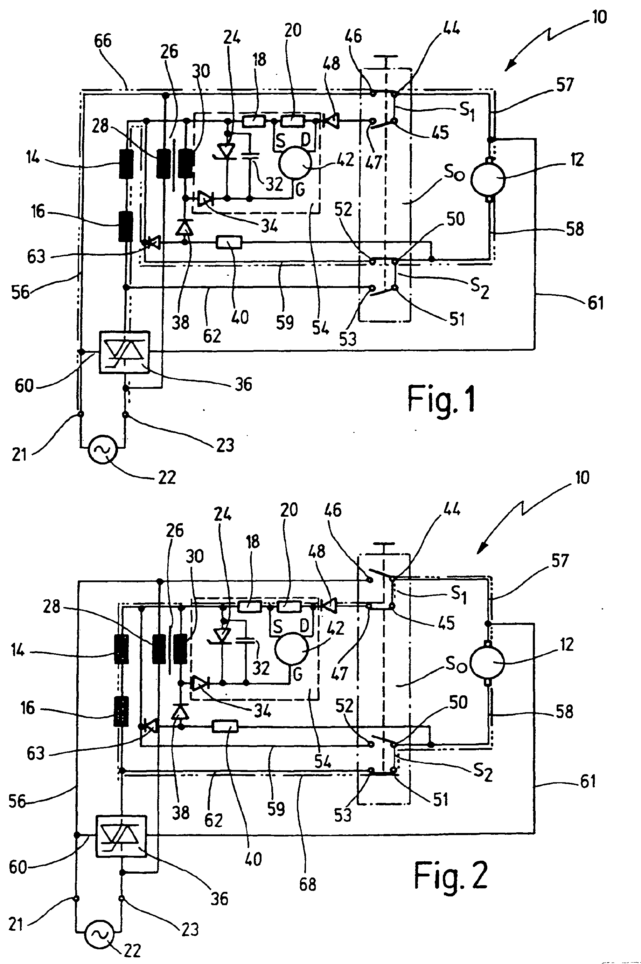

Ein erfindungsgemäßer Reihenschlußmotor ist in den Fig. 1 und 2 insgesamt mit der Ziffer 10 bezeichnet.

Der Motor 10 umfaßt einen Anker mit einer Ankerwicklung 12, die über einen nicht dargestellten Kommutator und lediglich schematisch angedeutete Bürsten über einen Schalter S₀ im Motorbetrieb gemäß Fig. 1 in Reihe mit einer Speisespannungsquelle 22 schaltbar ist, die eine Wechselspannung von 230 Volt abgibt.

Bei dem Schalter S₀ handelt es sich um einen zweipoligen Umschalter mit einem ersten Umschalter S₁ und einem zweiten Umschalter S₂. Der erste Pol der Speisespannungsquelle 22 ist über eine Leitung 56 mit einem ersten Umschaltkontakt 46 des ersten Umschalters S₁ verbunden, der in dem in Fig. 1 dargestellten Motorbetrieb mit zwei miteinander verbundenen Schaltkontakten 44 und 45 des Umschalters S₁ verbunden ist, die wiederum über eine Leitung 57 mit einem Pol der Ankerwicklung 12 gekoppelt sind. Der zweite Pol der Ankerwicklung 12 ist über eine Leitung 58 mit zwei miteinander verbundenen Kontakten 50 und 51 des zweiten Umschalters S₂ verbunden, die wiederum in der gezeichneten Schaltstellung mit einem Kontakt 52 verbunden sind, der über eine Leitung 59 mit einem ersten Ende einer ersten Feldwicklung 14 gekoppelt ist, die mit der zweiten Feldwicklung 16 in Reihe geschaltet ist und über eine Steuerelektronik 36 mit dem zweiten Pol 23 der Speisespannungsquelle 22 verbunden ist. Die Steuerelektronik 36 ist zusätzlich über eine Steuerleitung 60 mit dem einen Pol 21 der Speisespannungsquelle 22 und über eine Steuerleitung 61 mit den Kontakten 44 und 45 des ersten Umschalters S₁ gekoppelt.

Die Steuerelektronik 36 dient zur Begrenzung des Anlaufstroms beim Anschalten des Motors, zur Begrenzung der Leerlaufdrehzahl des Motors und verhindert es, daß der Motor anläuft, wenn ein Stecker zur Verbindung mit der Speisespannungsquelle 22 eingesteckt wird, während sich der Schalter S₀ in der in Fig. 1 gezeichneten Einschaltstellung befindet. Diese an sich bekannte Steuerelektronik 36 ist mit der Feldwicklung 16 verbunden, während die zweite Feldwicklung 14 über den Schalter S₀ mit der Ankerwicklung 12 und diese wiederum mit dem anderen Pol der Speisespannungsquelle 22 gekoppelt ist. Durch diese Anordnung wird die Entstörung des Reihenschlußmotors 10 erleichtert.

Der so im Motorbetrieb geschlossene Motorstromkreis 66, in dem die Ankerwicklung 12, die beiden Feldwicklungen 14, 16 und die Steuerelektronik 36 enthalten sind, ist in Fig. 1 durch eine mit drei Punkten strichpunktierte Linie verdeutlicht.

Der zweite Umschaltkontakt 47 des ersten Umschalters S₁ steht mit der Anode einer Diode 48 in Verbindung, die an ihrer Kathode mit einem Lastwiderstand 20 verbunden ist, der etwa 12 Ohm beträgt. Der Lastwiderstand 20 ist an seinem anderen Ende über einen Stromfühlerwiderstand 18 von etwa 0,3 Ohm mit der Feldwicklung 14 verbunden, die auch über die Leitung 59 mit dem Schaltkontakt 52 des zweiten Umschalters S₂ gekoppelt ist.

Ferner ist ein Transformator 26 mit seiner Primärwicklung 28 zwischen den beiden Polen 21 und 23 der Speisespannung 22 angeschlossen. Mit seiner Sekundärwicklung 30 ist der Transformator 26 an einem Ende mit der Feldwicklung 14 und dem Stromfühlerwiderstand 18 verbunden, während das andere Ende der Sekundärwicklung 30 mit der Kathode einer Diode 38 verbunden ist, die an ihrem anderen Ende über einen Vorwiderstand 40 von etwa 12 Ohm an die zur Ankerwicklung 12 führende Leitung 58 angeschlossen ist.

Zur Vermeidung von Schäden am Transformator 26 oder der Diode 38 im Falle eines Lichtbogens am Schalter S₂ ist zusätzlich am Vorwiderstand 40 und der Diode 38 eine Schutzdiode 63 angeschlossen, die mit ihrer Kathode am Kontakt 52 des zweiten Umschalters S₂ liegt, so daß eine Verbindung zwischen den Kontakten 50, 52 über die Schutzdiode 63 und den Vorwiderstand 40 besteht.

Ferner ist ein Feldeffekttransistor 42 zur Steuerung des im Bremsbetrieb über die Diode 48, den Lastwiderstand 20 und den Stromfühlerwiderstand 18 über die Feldwicklungen 14, 16 fließenden Bremsstroms vorgesehen, wobei der Feldeffekttransistor 42 mit Drain zwischen der Diode 48 und dem Lastwiderstand 20 angeschlossen ist, mit Source zwischen dem Lastwiderstand 20 und dem Stromfühlerwiderstand 18 angeschlossen ist und mit seinem Gate an der Kathode einer Zenerdiode 24 mit einer Spannung von 5,8 oder 6,8 Volt angeschlossen ist, das mit ihrer Anode an das Ende der Sekundärwicklung 30 gekoppelt ist, die mit der Feldwicklung 14 und dem Stromfühlerwiderstand 18 verbunden ist. Das Gate des Feldeffekttransistors 42 und die Kathode der Zenerdiode 24 sind ferner über eine Diode 34 an das andere Ende der Sekundärwicklung 30 des Transformators 26 angekoppelt, das auch mit der Diode 38 verbunden ist. Die Diode 34 dient dazu, einen Glättungskondensator 32 von etwa 2 Mikrofarad aufzuladen, der parallel zur Zenerdiode 24 angeschlossen ist, um die an der Zenerdiode anliegende Spannung zu glätten.

Der Feldeffekttransistor 42, der Lastwiderstand 20, der Vorwiderstand 18, die Zenerdiode 24, der Kondensator 32 und die Diode 34 bilden insgesamt eine Transistorschaltung 54, die dazu dient, den über die Diode 48, die Widerstände 18 und 20 und die Feldwicklungen 14, 16 fließenden Bremsstrom zu begrenzen, wenn der Reihenschlußmotor 10 aus der in Fig. 1 gezeichneten Stellung in den Bremsbetrieb gemäß Fig. 2 umgeschaltet wird.

Im Bremsbetrieb gemäß Fig. 2 ist die Verbindung zwischen den Kontakten 44 und 46 des ersten Umschalters S₁ geöffnet, während die Verbindung zwischen den Kontakten 45, 47 des ersten Umschalters S₁ geschlossen ist. Ferner ist die Verbindung zwischen den Kontakten 50, 52 des zweiten Umschalters S₂ geöffnet und die beiden miteinander verbundenen Kontakte 50, 51 des zweiten Umschalters S₂ sind mit dem Kontakt 53 verbunden, der über eine Leitung 62 an den Anschluß zwischen der zweiten Feldwicklung 16 und der Steuerschaltung 36 angeschlossen ist.

Somit ist der Reihenschlußmotor 10 im Bremsbetrieb durch die geöffneten Kontakte 44, 46 von der Speisespannungsquelle 22 abgetrennt, während von der Ankerwicklung 12 über die Kontakte 45, 47 des ersten Umschalters S₁, die Diode 48, die Widerstände 18, 20, die Feldwicklungen 14, 16 und die Kontakte 53, 51 des zweiten Umschalters S₂ ein geschlossener Bremsstromkreis 68 gebildet ist, der in Fig. 2 wiederum durch eine strichpunktierte Linie mit drei Punkten gekennzeichnet ist.

Die Schaltung funktioniert nun auf folgende Weise.

Wird der Motor 10 von der in Fig. 1 dargestellten Arbeitsstellung in seine Bremsstellung gemäß Fig. 2 umgeschaltet, so wird in Zusammenwirkung mit der sich drehenden Ankerwicklung 12 durch die von der Diode 38 gleichgerichtete Spannung der Sekundärwicklung 30 des Transformators die Bremsung zuverlässig eingeleitet.

Da die an dem Stromfühlerwiderstand 18 abfallende Spannung der an der Zenerdiode 24 anliegenden Spannung entgegengesetzt ist, wird der Feldeffekttransistor 42, der mit Source S und Drain D parallel zum Lastwiderstand 20 angeschlossen ist, in Abhängigkeit vom Bremsstrom gesteuert. Dabei ergibt sich zu Beginn des Bremsvorgangs ein kurzer Stromimpuls über den Feldeffekttransistor 42, da zunächst nur eine geringe Spannung am Stromfühlerwiderstand 18 abfällt, so daß der Feldeffekttransistor 42 kurz leitend wird. Mit sofortigem Anstieg des Bremsstroms steigt jedoch die am Stromfühlerwiderstand 18 abfallende Spannung, die der an der Zenerdiode 24 anliegenden Spannung entgegengesetzt ist, so daß der Feldeffekttransistor 42 in seinen Sperrzustand versetzt wird.

Erst wenn der über die Widerstände 18, 20 fließende Bremsstrom etwa 10 Ampere unterschreitet, wird der Feldeffekttransistor 42 leitend und überbrückt so den Lastwiderstand 20, wodurch im fortgeschrittenen Zustand der Bremsung bei abfallender Bremsspannung der Bremsstrom infolge des nunmehr verringerten Widerstandes trotz abfallender Bremsspannung auf einem hohen Wert gehalten wird.

Der Feldeffekttransistor 42 bleibt von nun an leitend, so daß der Bremsvorgang in seiner Abklingphase insgesamt deutlich verstärkt wird.

Insgesamt läßt sich auf diese Weise eine deutlich gleichmäßigere Bremsung gewährleisten und die Bremswirkung insbesondere zum Ende des Bremsvorgangs hin verbessern.

Gegenüber der vorbekannten Anordnung mit Wendepolwicklungen ergibt sich ein vereinfachter Aufbau, da auf die Wendepolwicklungen vollständig verzichtet werden kann und darüber hinaus die antiparallel geschaltete Zenerdiodenstrecke entfällt. Auch wird der Ankerstrom reduziert, was zur Verminderung des Bürstenfeuers führt.

Bei Auslegung für einen Universalmotor mit einer Speisespannung von 230 Volt und einer Leistung von etwa 2000 Watt, der zum Antrieb eines großen Zweihand-Winkelschleifers geeignet ist, würde sich bei der aus der EP 0 471 038 B1 vorbekannten Anordnung mit Wendepolwicklungen ein Bremsstrom von etwa 25 Ampere ergeben.

Mit der erfindungsgemäßen Anordnung kann die gleiche Bremswirkung erzielt werden, wobei der Ankerstrom auf etwa die Hälfte des Wertes reduziert wird, während durch die Durchschaltung des Feldeffekttransistors 42 bei fortgeschrittener Bremsung ein höherer Bremsstrom durch die Feldwicklungen 14, 16 fließt, so daß sich insgesamt etwa die gleiche Bremsleistung ergibt.

Im Vergleich zu der aus der DE 42 01 023 A1 vorbekannten Schaltung weist die erfindungsgemäße Anordnung eine deutlich erhöhte Zuverlässigkeit der Einleitung der Bremsung auf, da die von der Sekundärwicklung erzeugte Spannung ständig anliegt und alle 20 ms bei der üblichen Netzfrequenz von 50 Hz die Einleitung der Bremsung ermöglicht.

Dagegen gibt es gemäß der vorbekannten Schaltung nach der DE 42 01 023 A1 nur eine einzige Möglichkeit zur Einleitung der Bremsung, indem der aufgeladene Kondensator einmalig über die Feldwicklung entladen wird. Reicht dieser Stromstoß nicht aus, um den Bremsvorgang zuverlässig einzuleiten, so wird auch danach bei einmal entladenem Kondensator keine Bremsung mehr ermöglicht.

Die Diode 48 dient lediglich als Schutz gegen den rein theoretischen Fall, daß infolge einer ungünstigen Remanenz, wenn der Bremsvorgang noch nicht über die Sekundärwicklung 30 des Transformators 26 eingeleitet ist, eine Gegenspannung induziert werden könnte, die unter ungünstigen Umständen zur Zerstörung des Feldeffekttransistors 42 führen könnte.

Der Transformator 26 muß nur für eine sehr geringe Leistung ausgelegt sein, da er nur eine Hilfsspannung für die Einleitung der Bremsung liefert. Als Sekundärspannung kann bspw. eine Spannung von etwa 8 V effektiv verwendet werden, wobei der Stromfluß durch den Vorwiderstand von 15 Ohm begrenzt wird. Je nach Impedanz der Sekundärwicklung 30 kann auch auf den Vorwiderstand verzichtet werden. Als Transformator 26 kann ein handelsüblicher Klein-Transformator verwendet werden.

Der Schaltzeitpunkt des Feldeffekttransistors 42 wird durch den Wert der Zenerdiodenspannung einerseits und die Größe des Stromfühlerwiderstandes andererseits festgelegt. Je größer die Zenerdiodenspannung und je kleiner der Wert des Stromfühlerwiderstandes, desto früher setzt die Bremsung ein. Die Bremscharakteristik läßt sich so an die gewünschten Verhältnisse bei einer Maschine anpassen.

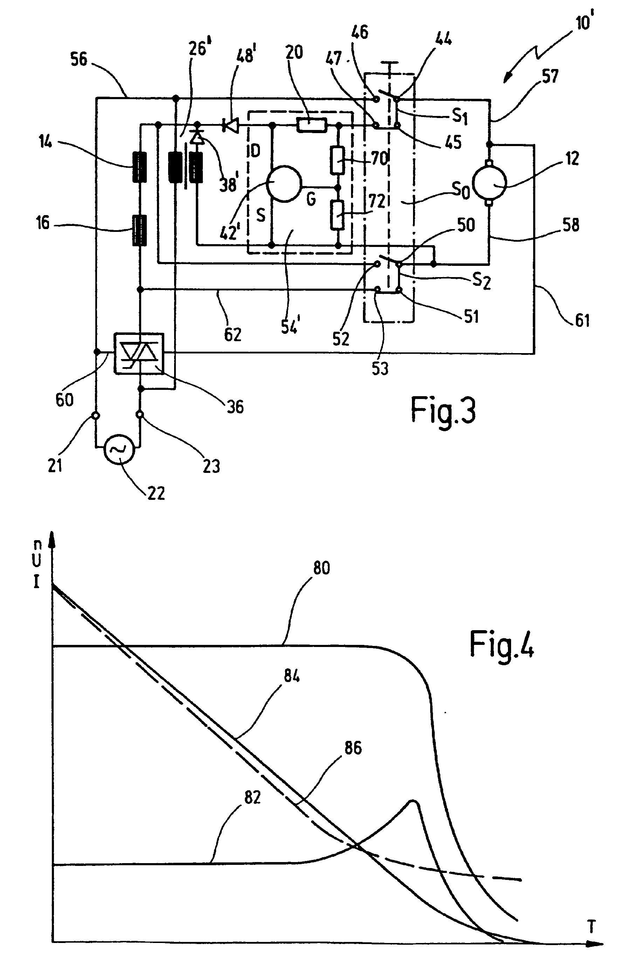

Eine abgewandelte Ausführung eines erfindungsgemäßen Reihenschlußmotors ist in Fig. 3 dargestellt und insgesamt mit der Ziffer 10' bezeichnet.

Die verwendete Schaltung entspricht weitgehend der zuvor anhand von Fig. 2 beschriebenen Ausführung, unterscheidet sich jedoch im wesentlichen durch eine geänderte Ausführung der Transistorschaltung 54', die wiederum einen Feldeffekttransistor 42' umfaßt.

Für entsprechende Teile werden entsprechende Bezugsziffern verwendet.

Der Motor 10' gemäß Fig. 3 ist lediglich im Bremsbetrieb dargestellt, während auf die Darstellung des Motorbetriebes verzichtet wurde.

Im Motorbetrieb entspricht die Schaltung vollständig derjenigen, die zuvor anhand von Fig. 1 dargestellt wurde.

Im Bremsbetrieb ist gemäß Fig. 3 der Motor von der Wechselspannungsquelle 22 abgetrennt, und es ist ein geschlossener Bremsstromkreis über die beiden in Reihe liegenden Feldwicklungen 14, 16, die Kontakte 53, 51, 50 des Schalters S₂, den Anker 12 mit zugehörigem Kommutator, die Kontakte 44, 45, 47 des Schalters S₁, einen Lastwiderstand 20 und eine Diode 48' gebildet.

An die beiden Pole 21, 23 der externen Wechselspannungsquelle 22 ist wiederum ein Transformator 26' mit seiner Primärseite angeschlossen. Sekundärseitig ist der Transformator 26' über eine Diode 38' an einen Feldpol 14 angeschlossen und an seinem anderen Ende an die Leitung 58, die mit dem Anker 12 und dem Kontakt 50 des Schalters S₂, sowie mit dem anderen Feldpol 16 verbunden ist. Beide Dioden 38', 48' liegen mit ihreren Kathoden gemeinsam an der Feldwicklung 14. Die Anode der Diode 48' ist mit dem Lastwiderstand 20 verbunden, an dessen anderem Ende, das mit dem Kontakt 47 des Schalters S₁ verbunden ist, ein Spannungsteiler 70, 72 angeschlossen ist. Der Spannungsteiler 70, 72 besteht aus einem ersten Widerstand 70, der beispielsweise 1 Kiloohm betragen kann, und aus einem zweiten Widerstand 72, der beispielsweise 6 Kiloohm betragen kann. Der Widerstand 70 ist mit einem Ende an den Kontakt 47 des Schalters S₁ angeschlossen und mit seinem anderen Ende mit dem Widerstand 72 verbunden, der mit dem Kontakt 50 des Schalters S₂ verbunden ist. Statt des Widerstandes 70 könnte auch eine Zenerdiode vorgesehen sein, die die gewünschte Spannung erzeugt.

Die Transistorschaltung 54' weist einen Feldeffekttransistors des Typs IRF 540 auf, der mit Drain D zwischen der Anode der Diode 48' und dem Lastwiderstand 20 angeschlossen ist und mit Source S mit der Sekundärwicklung des Transformators 26, dem Widerstand 72 und mit dem Kontakt 50 des Schalters S₂ gekoppelt ist, der über die Leitung 58 mit der Ankerwicklung 12 verbunden ist. Der Feldeffekttransistor 42' wird an seinem Gate G über den Spannungsteiler 70, 72 angesteuert, von dem die Spannung an der Verbindung der Widerstände 70, 72 abgegriffen wird.

Während bei dem Motor 10 gemäß der Figuren 1 und 2 im Bremsbetrieb über den Feldeffekttransistor 42 der Feldstrom (Strom durch die beiden in Reihe liegenden Feldwicklungen 14, 16) auf einem annähernd konstanten Wert geregelt wurde, wird bei dem Motor 10' gemäß Fig. 3 vom Feldeffekttransistor 42' der Feldstrom geregelt und die Ankerspannung während des Bremsvorgangs annähernd konstant gehalten, bis dieser am Ende des Bremsvorgangs endgültig zusammenbricht.

Die Dimensionierung kann für einen Motor von etwa 2000 Watt Leistungsaufnahme bei 230 V Wechselspannung derart ausgelegt werden, daß der Transformator für eine Sekundärspannung von 4 V bei einer Leistung von 0,25 Watt ausgelegt ist, wobei als Feldeffekttransistor 42' der MOSFET IRF 540 verwendet werden kann, der für einen maximalen Strom von 28 A und eine maximale Verlustleistung von 125 Watt ausgelegt ist. Als Lastwiderstand 20 kann hierbei ein Widerstand von 0,33 Ohm bei einer maximalen Verlustleistung von 10 Watt verwendet werden, und der Spannungsteiler kann, wie bereits erwähnt, aus den beiden Widerständen 70 von 1 Kiloohm und 72 von 6 Kiloohm bestehen.

Während des Bremsvorgangs beginnt der Feldeffekttransistor 42' zu leiten, wenn zwischen Gate G und Source S eine Spannung von etwa 4 V über den Spannungsteiler 70, 72 anliegt. Da am Lastwiderstand 20 eine Spannung abfällt, die von der Größe des durch die Ankerwicklung 12 fließenden Stroms abhängig ist, wird bei dieser Ausführung die Ankerspannung während des Bremsvorgangs weitgehend konstant gehalten und der Feldstrom vom Feldeffekttransistor 42' geregelt.

Am Ende des Bremsvorgangs fällt die Ankerspannung dann so stark ab, daß der Feldeffekttransistor 42' in den Sperrzustand übergeht, wodurch der durch die Feldwicklungen 14, 16 fließende Feldstrom nochmals kurzzeitig ansteigt, so daß der Bremsvorgang an seinem Ende verstärkt wird.

Dieses Zeitverhalten ist in Fig. 4 schematisch dargestellt, in der die Ankerspannung, der Feldstrom und die Drehzahl über der Bremszeit aufgetragen sind.

Bei dem Motor 10' gemäß Fig. 3 ergibt sich eine während des Bremsvorgangs weitgehend konstante Ankerspannung, die durch die Kurve 80 dargestellt ist, und die erst am Ende des Bremsvorgangs abfällt.

Wie vorstehend bereits erläutert, wird der durch die Feldwicklungen 14, 16 fließende Feldstrom, der durch die Linie 82 dargestellt ist, zunächst weitgehend konstant gehalten und steigt zum Ende des Bremsvorgangs nochmals an, wenn der Feldeffekttransistor 42' in seinen Sperrzustand übergeht. Erst darauf erfolgt ein schnelles Abklingen des Feldstroms. Als Ergebnis resultiert hieraus ein verbessertes Abklingverhalten für die Drehzahl, die durch die Kurve 84 angedeutet ist, so daß sich am Ende des Bremsvorgangs ein schnelles Abklingen der Drehzahl auf einen Wert von 0 ergibt, was im dargestellten Fall bei etwas mehr als 3 Sekunden auftritt.

Zum Vergleich wurde gestrichelt mit der Ziffer 86 eine Abklingkurve für die Drehzahl eingezeichnet, die sich bei einem herkömmlichen Reihenschlußmotor mit selbsterregter Bremsung und Wendepolwicklungen ergibt, wie dies beispielsweise aus der EP 0 471 038 B1 bekannt ist.

Es zeigt sich, daß sich hierbei ein langsames "Austrudeln" des Motors auch nach beendeter Bremsung ergibt.

## Patentansprüche

1. Reihenschlußmotor mit Kommutator, insbesondere für ein gebremstes Elektrowerkzeug, mit einer Schalteinrichtung (S₀) zur Umschaltung zwischen Motorbetrieb und Bremsbetrieb, wobei im Motorbetrieb mindestens eine Feldwicklung (14, 16) mit einer Ankerwicklung (12) in einem von einer Versorgungsspannung (22) beaufschlagten Motorstromkreis (66) in Reihe geschaltet ist, und wobei im Bremsbetrieb die mindestens eine Feldwicklung (14, 16) mit der Ankerwicklung (12) einen geschlossenen und von der Versorgungsspannung (22) abgetrennten Bremsstromkreis (68) bildet, **dadurch gekennzeichnet, daß** ein netzgespeister Transformator (26) vorgesehen ist, dessen Sekundärwicklung (30) im Bremsstromkreis (68) parallel zu der mindestens einen Feldwicklung (14, 16) angeschlossen ist, und daß eine Transistorschaltung (54) zur Steuerung des im Bremsstromkreis (68) über die Ankerwicklung (12) und die mindestens eine Feldwicklung (14, 16) fließenden Stroms vorgesehen ist.

2. Reihenschlußmotor nach Anspruch 1, **dadurch gekennzeichnet, daß** ein Feldeffekttransistor (42) vorgesehen ist, der mit Source (S) und Drain (D) parallel zu einem Lastwiderstand (20) im Bremsstromkreis (68) zwischen der Ankerwicklung (12) und der mindestens einen Feldwicklung (14, 16) angeschlossen ist und der über eine vom Bremsstrom abhängige Steuerspannung zwischen Source (S) und Gate (G) angesteuert wird.

3. Reihenschlußmotor nach Anspruch 2, **dadurch gekennzeichnet, daß** an die Sekundärwicklung (30) des Transformators (26) ein Spannungsstabilisator (24) angeschlossen ist, der über einen im Bremsstromkreis (68) mit dem Lastwiderstand (20) in Reihe geschalteten Stromfühlerwiderstand (18) zur Erzeugung einer bremsstromabhängigen, der Spannung des Spannungsstabilisators (24) entgegengerichteten Vorspannung zwischen Source (S) und Gate (G) des Feldeffekttransistors (42) angeschlossen ist.

4. Reihenschlußmotor nach Anspruch 3, **dadurch gekennzeichnet, daß** als Spannungsstabilisator (24) eine Zenerdiode vorgesehen ist, die mit ihrer Anode an der mindestens einen Feldwicklung (14), einem Ende der Sekundärwicklung (30) und dem Stromfühlerwiderstand (18) angeschlossen ist und mit Ihrer Kathode mit dem Gate des Feldeffekttransistors (42) und mit dem anderen Ende der Sekundärwicklung (30) verbunden ist.

5. Reihenschlußmotor nach Anspruch 4, **dadurch gekennzeichnet, daß** ein Kondensator (32) parallel zu der Zenerdiode (24) angeschlossen ist, und daß die Kathode der Zenerdiode (24) über eine Diode (34) an die Sekundärwicklung (30) des Transformators (26) angeschlossen ist.

6. Reihenschlußmotor nach einem der Ansprüche 3 bis 5, soweit auf Anspruch 3 rückbezogen, **dadurch gekennzeichnet, daß** der Feldeffekttransistor (42) und der Stromfühlerwiderstand (18) mit der Kathode einer Diode (48) verbunden sind, deren Anode im Bremsstromkreis (68) mit der Ankerwicklung (12) verbunden ist.

7. Reihenschlußmotor nach einem der vorhergehenden Ansprüche, **dadurch gekennzeichnet, daß** die Sekundärwicklung (30) über einen Gleichrichter (38) an einen Pol der Ankerwicklung (12) angeschlossen ist.

8. Reihenschlußmotor nach Anspruch 7, **dadurch gekennzeichnet, daß** zwischen dem einen Pol der Ankerwicklung (12) und dem anderen Ende der Sekundärwicklung (30) bzw. der zumindest einen Feldwicklung (14, 16) eine Schutzdiode (63) zum Schutz gegen Lichtbögen von der Schalteinrichtung (S) vorgesehen ist.

9. Reihenschlußmotor nach einem der Ansprüche 2 bis 8, **dadurch gekennzeichnet, daß** der Lastwiderstand (20) zwischen Source (S) und Drain (D) als Wendepolwicklung ausgebildet ist.

10. Reihenschlußmotor mit Kommutator, insbesondere für ein gebremstes Elektrowerkzeug, mit einer Schalteinrichtung (S₀) zur Umschaltung zwischen Motorbetrieb und Bremsbetrieb, wobei im Motorbetrieb mindestens eine Feldwicklung (14, 16) mit einer Ankerwicklung (12) in einem von einer Versorgungsspannung (22) beaufschlagten Motorstromkreis (66) in Reihe geschaltet ist, und wobei im Bremsbetrieb die mindestens eine Feldwicklung (14, 16) mit der Ankerwicklung (12) einen geschlossenen und von der Versorgungsspannung (22) abgetrennten Bremsstromkreis (68) bildet, **dadurch gekennzeichnet, daß** ein netzgespeister Transformator (26') vorgesehen ist, dessen Sekundärwicklung (30) im Bremsstromkreis (68) parallel zu der mindestens einen Feldwicklung (14, 16) angeschlossen ist, daß eine Transistorschaltung (54') zur Steuerung des im Bremsstromkreis (68) über die Ankerwicklung (12) und die mindestens eine Feldwicklung (14, 16) fließenden Stroms vorgesehen ist, daß die Transistorschaltung (54') einen Feldeffekttransistor (42') aufweist, der mit Source (S) und Drain (D) über eine Diode (48') parallel an die mindestens eine Feldwicklung (14, 16) angeschlossen ist, und daß die Transistorschaltung (54') den Strom durch die mindestens eine Feldwicklung (14, 16) in Abhängigkeit vom über die Ankerwicklung (12) fließenden Strom regelt.

11. Reihenschlußmotor nach Anspruch 10, **dadurch gekennzeichnet, daß** der Feldeffektransistor (42') mit seinem Gate (G) über einen Spannungsteiler (70, 72) an die beiden Enden der Ankerwicklung (12) angeschlossen ist.

12. Reihenschlußmotor nach Anspruch 11, **dadurch gekennzeichnet, daß** im Bremsstromkreis ein Lastwiderstand (20) zwischen einem Ende der Ankerwicklung (12) und der mindestens einen Feldwicklung (14) über die Diode (48') angeschlossen ist, daß an einem Ende des Lastwiderstandes (20) der Feldeffektransistor (42') mit Drain (D) angeschlossen ist, und daß der Feldeffekttransistor (42') mit Source (S) mit dem anderen Ende der Ankerwicklung (12) und der mindestens einen Feldwicklung (16) verbunden ist.

13. Reihenschlußmotor nach einem der Ansprüche 10 bis 12, **dadurch gekennzeichnet, daß** die Sekundärwicklung (30) über einen Gleichrichter (38) an einen Pol der Ankerwicklung (12) angeschlossen ist.

14. Reihenschlußmotor nach Anspruch 13, **dadurch gekennzeichnet, daß** zwischen dem einen Pol der Ankerwicklung (12) und dem anderen Ende der Sekundärwicklung (30) bzw. der zumindest einen Feldwicklung (14, 16) eine Schutzdiode (63) zum Schutz gegen Lichtbögen von der Schalteinrichtung (S) vorgesehen ist.

## Claims

1. A series wound commutator motor, in particular for an electric power tool, comprising switching means (S₀) for switching between a motor mode and a braking mode, wherein in motor mode at least one field winding (14, 16) is connected in series with an armature winding (12) in a motor circuit (66) fed with a voltage supply (22), and wherein in braking mode the at least one field winding (14, 16) with the armature winding (12) forms a closed braking circuit (68) separated from the voltage supply (22), **characterised in that**, a mains-driven transformer (26) is provided, whose secondary winding (30) is connected in the braking circuit (68) parallel to the at least one field winding (14, 16), and **in that** a transistor circuit (54) is provided for controlling the current flowing in the braking circuit (68) through the armature winding (12) and the at least one field winding (14, 16).

2. The series motor of claim 1, **characterized in that** winding a field-effect transistor (42) is provided with its source (S) and drain (D) connected in parallel to a load resistor (20) in the braking circuit (68) between the armature winding (12) and the at least one field winding (14, 16), the field-effect transistor being triggered by a control voltage dependent on the braking current between source (S) and gate (G).

3. The series motor of claim 2, **characterized in that** the secondary winding (30) of the transformer (26) is connected to a voltage stabiliser (24), which is connected in the braking circuit (68) to a current-sensing resistor (18) connected in series with the load resistor (20) for generating a braking current dependent voltage opposite the voltage of the voltage stabiliser (24) between the source (S) and the gate (G) of the field-effect transistor (42).

4. The series motor of claim 3, **characterized in that** a Zener diode is provided as the voltage stabiliser (24), with its anode connected to the at least one field winding (14), to one end of the secondary winding (30) and to the current-sensing resistor (18) and with its cathode connected to the gate of the field-effect transistor (42) and to the other end of the secondary winding (30).

5. The series motor of claim 4, **characterized in that** a capacitor (32) is connected in parallel to the Zener diode (24), and **in that** the cathode of the Zener diode (24) is connected to the secondary winding (30) of the transformer (26) via a diode (34).

6. The series motor of any of claims 3 to 5, as far as dependent from claim 3, **characterized in that** the field-effect transistor (42) and the current-sensing resistor (18) are connected to the cathode of a diode (48), whose anode is connected in the braking circuit (68) with the armature winding (12).

7. The series motor of any of the proceeding claims, **characterized in that** the secondary winding (30) is connected to a pole of the armature winding (12) via a rectifier (38).

8. The series motor of claim 7, **characterized in that** a protective diode (63) for protection against arcing in the switching means (S) is provided between one pole of the armature winding (12) and the other end of the secondary winding (30) or the at least one field winding (14, 16).

9. The series motor of any of claims 2 to 8, **characterized in that** the load resistor (20) between source (S) and drain (D) is configured as a commutating winding.

10. A series wound commutator motor, in particular for an electric power tool, comprising switching means (S₀) for switching between a motor mode and a braking mode, wherein in motor mode at least one field winding (14, 16) is connected in series with an armature winding (12) in a motor circuit (66) fed with a voltage supply (22), and wherein in braking mode the at least one field winding (14, 16) with the armature winding (12) forms a closed braking circuit (68) separated from the voltage supply (22), **characterised in that**, a mains-driven transformer (26') is provided, whose secondary winding (30) is connected in the braking circuit (68) parallel to the at least one field winding (14, 16), and **in that** a transistor circuit (54') is provided for controlling the current flowing in the braking circuit (68) through the armature winding (12) and the at least one field winding (14, 16), **in that** the transistor circuit (54') comprises a field-effect transistor (42') being connected with its source (S) and drain (D) in parallel to the at least one field winding (14, 16) via a diode (48'), and **in that** the transistor circuit (54') regulates the current flowing through the at least one field winding (14, 16) depending on the current flowing through the armature winding (12).

11. The series motor of claim 10, **characterized in that** the field-effect transistor (42') is connected with its gate (G) to the two ends of the armature winding (12) via a voltage divider (70, 72).

12. The series motor of claim 11, **characterized in that** a load resistor (20) is connected in the braking circuit between one end of the armature winding (12) and the at least one field winding (14) via a diode (48'), **in that** the drain (D) of the field-effect transistor (42') is connected to one end of the load resistor (20) and wherein the source (S) of the field-effect transistor (42') is connected with the other end of the armature winding (12) and with the at least one field winding (16).

13. The series motor of any of claims 10 to 12, **characterized in that** the secondary winding (30) is connected to one pole of the armature winding via a rectifier (38).

14. The series motor of claim 13, **characterized in that** a protecting diode (63) for protecting against arcing from the switching device (S) is provided between one pole of the armature winding (12) and the other end of the secondary winding (30) or the at least one field winding (14, 16), respectively.

## Revendications

1. Moteur série à collecteur, en particulier pour un outil électrique freiné, comportant un dispositif de commutation (Sₒ) pour basculer entre le mode de fonctionnement à moteur et le mode de fonctionnement à frein, dans le mode de fonctionnement à moteur au moins une bobine d'inducteur (14, 16) étant montée en série avec une bobine d'induit (12) dans un circuit électrique du moteur (66) alimenté par une tension d'alimentation (22), et dans le mode de fonctionnement à frein ladite au moins une bobine d'inducteur (14, 16) formant avec la bobine d'induit (12) un circuit électrique de frein (68) fermé et séparé de la tension d'alimentation (22), **caractérisé en ce qu'**il est prévu un transformateur (26) alimenté par le réseau, dont l'enroulement secondaire (30) est monté en parallèle avec ladite au moins une bobine d'inducteur (14, 16) dans le circuit électrique de frein (68), et **en ce qu'**il est prévu un circuit de transistor (54) destiné à commander le courant circulant dans le circuit électrique de frein (68) à travers la bobine d'induit (12) et ladite au moins une bobine d'inducteur (14, 16).

2. Moteur série selon la revendication 1, **caractérisé en ce qu'**il est prévu un transistor à effet de champ (42), qui avec la source (S) et le drain (D) est monté en parallèle à une résistance de charge (20) dans le circuit électrique du moteur (68) entre la bobine d'induit (12) et ladite au moins une bobine d'inducteur (14, 16) et qui est activé entre la source (S) et la grille (G) par l'intermédiaire d'une tension de commande qui dépend du courant de freinage.

3. Moteur série selon la revendication 2, **caractérisé en ce qu'**à l'enroulement secondaire (30) du transformateur (26) est raccordé un stabilisateur de tension (24) qui est raccordé entre la source (S) et la grille (G) du transistor à effet de champ (42), par l'intermédiaire d'une résistance de détection de courant (18) montée en série avec la résistance de charge (20) dans le circuit électrique de frein (68) en vue de générer une tension de polarisation, fonction du courant de freinage et en sens inverse de la tension du stabilisateur de tension (24).

4. Moteur série selon la revendication 3, **caractérisé en ce qu'**une diode de Zener est prévue pour former le stabilisateur de tension (24), laquelle est raccordée avec son anode à ladite au moins une bobine d'inducteur (14), à une extrémité de l'enroulement secondaire (30) et à la résistance de détection de courant (18) et est reliée avec sa cathode à la grille du transistor à effet de champ (42) et à l'autre extrémité de l'enroulement secondaire (30).

5. Moteur série selon la revendication 4, **caractérisé en ce qu'**un condensateur (32) est monté en parallèle avec la diode de Zener (24), et **en ce que** la cathode de la diode de Zener (24) est raccordée par l'intermédiaire d'une diode (34) à l'enroulement secondaire (30) du transformateur (26).

6. Moteur série selon l'une quelconque des revendications 3 à 5, pour autant qu'il soit fait référence à la revendication 3, **caractérisé en ce que** le transistor à effet de champ (42) et la résistance de détection de courant (18) sont reliées à la cathode d'une diode (48), dont l'anode est reliée dans le circuit électrique de frein (68) à la bobine d'induit (12).

7. Moteur série selon l'une quelconque des revendications précédentes, **caractérisé en ce que** l'enroulement secondaire (30) est raccordé par l'intermédiaire d'un redresseur (38) à un pôle de la bobine d'induit (12).

8. Moteur série selon la revendication 7, **caractérisé en ce qu'**une diode de protection (63), destinée à protéger contre les arcs électriques du dispositif de commutation (S) est prévue entre l'un des pôles de la bobine d'induit (12) et l'autre extrémité de l'enroulement secondaire (30) ou de ladite au moins une bobine d'inducteur (14, 16).

9. Moteur série selon l'une quelconque des revendications 2 à 8, **caractérisé en ce que** la résistance de charge (20) est réalisée sous forme d'enroulement de commutation entre la source (S) et le drain (D).

10. Moteur série à collecteur, en particulier pour un outil électrique freiné, comportant un dispositif de commutation (Sₒ) pour basculer entre le mode de fonctionnement à moteur et le mode de fonctionnement à frein, dans le mode de fonctionnement à moteur au moins une bobine d'inducteur (14, 16) étant montée en série avec une bobine d'induit (12) dans un circuit électrique du moteur (66) alimenté par une tension d'alimentation (22), et dans le mode de fonctionnement à frein ladite au moins une bobine d'inducteur (14, 16) formant avec la bobine d'induit (12) un circuit électrique de frein (68) fermé et séparé de la tension d'alimentation (22), **caractérisé en ce qu'**il est prévu un transformateur (26) alimenté par le réseau, dont l'enroulement secondaire (30) est monté en parallèle avec ladite au moins une bobine d'inducteur (14, 16) dans le circuit électrique de frein (68), **en ce qu'**il est prévu un circuit de transistor (54') destiné à commander le courant circulant dans le circuit électrique de frein (68) à travers la bobine d'induit (12) et ladite au moins une bobine d'inducteur (14, 16), **en ce que** le circuit de transistor (54') comporte un transistor à effet de champ (42') qui avec la source (S) et le drain (D) est monté en parallèle à ladite au moins une bobine d'inducteur (14, 16) par l'intermédiaire d'une diode (48'), et **en ce que** le circuit de transistor (54') régule le courant passant à travers ladite au moins une bobine d'inducteur (14, 16) en fonction du courant passant à travers la bobine d'induit (12).

11. Moteur série selon la revendication 10, **caractérisé en ce que** le transistor à effet de champ (42') est raccordé avec sa grille (G), par l'intermédiaire d'un diviseur de tension (70, 72), aux deux extrémités de la bobine d'induit (12).

12. Moteur série selon la revendication 11, **caractérisé en ce que**, dans le circuit électrique de frein (68), une résistance de charge (20) est raccordée entre une extrémité de la bobine d'induit (12) et ladite au moins une bobine d'inducteur (14) par l'intermédiaire de la diode (48'), en ce le transistor à effet de champ (42') est raccordé avec le drain (D) à une extrémité de la résistance de charge (20) et **en ce que** le transistor à effet de champ (42') est relié avec la source (S) à l'autre extrémité de la bobine d'induit (12) et de ladite au moins une bobine d'inducteur (14, 16).

13. Moteur série selon l'une quelconque des revendications 10 à 12, **caractérisé en ce que** l'enroulement secondaire (30) est raccordé par l'intermédiaire d'un redresseur (38) à un pôle de la bobine d'induit (12).

14. Moteur série selon la revendication 13, **caractérisé en ce que**, entre l'un des pôles de la bobine d'induit (12) et l'autre extrémité de l'enroulement secondaire (30) ou de ladite au moins une bobine d'inducteur (14, 16), il est prévu une diode de protection (63) destinée à protéger contre les arcs électriques du dispositif de commutation (S).
